(19) Europäisches Patentamt
European Patent Office
Office européen des brevets

(11) EP 3 827 934 A1

(12) EUROPÄISCHE PATENTANMELDUNG

(43) Veröffentlichungstag:
**02.06.2021 Patentblatt 2021/22**

(51) Int Cl.:
***B25J 9/16*** (2006.01)

(21) Anmeldenummer: **19211804.0**

(22) Anmeldetag: **27.11.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder:
- **Siemens Aktiengesellschaft
80333 München (DE)**
- **Friedrich-Alexander-Universität
Erlangen-Nürnberg
91054 Erlangen (DE)**

(72) Erfinder: **Lomakin, Alexander
90411 Nürnberg (DE)**

# (54) VERFAHREN ZUM STEUERN EINES ROBOTERS, ROBOTER UND COMPUTERPROGRAMMPRODUKT

(57) Verfahren zum Steuern eines Roboters (10) aufweisend zumindest einen Endeffektor (14), insbesondere im Bereich der Mensch-Roboter-Kollaborationen, mit den Schritten:
a) Ermitteln (S302) eines Kraft-Erwartungs-Werts ($M(q)\ddot{q} + C(q, \dot{q}) + g(q) - \tau_R$) an dem Endeffektor (14) oder in Bezug auf diesen in Abhängigkeit einer gemessenen Ist-Position q des Endeffektors (14) oder sonstigen Teilen (18) des Roboters (10),
b) Messen (S304) eines Kraft-Ist-Werts $\tau_m$ an dem Endeffektor (14) oder in Bezug auf diesen,
c) Bilden (S306) einer Differenz aus dem Kraft-Erwartungs-Wert ($M(q)\ddot{q}+C(q,\dot{q})+g(q)-\tau_R$) und dem Kraft-Ist-Wert $\tau_m$, und
d) Überführen (S308) des Endeffektors (14) in einen sicheren Zustand in Abhängigkeit der Differenz und eines ermittelten Toleranzwerts $\tau_{F,max}$,
wobei der Toleranzwert $\tau_{F,max}$ vor Schritt a) ermittelt wird (S300) und geeignet ist, einen Fehler bei der Messung des Kraft-Ist-Werts $\tau_m$ zu detektieren.

Somit kann auf eine funktional sichere, insbesondere redundante Messung des Kraft-Ist-Werts verzichtet werden.

FIG 2

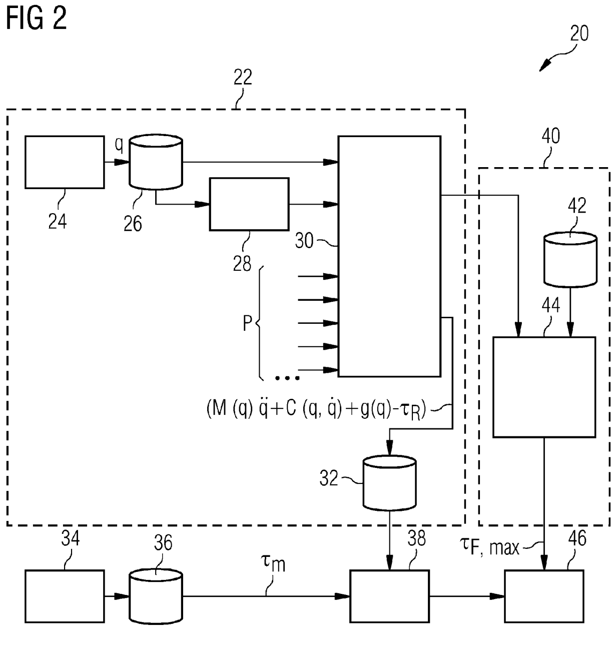




Printed by Jouve, 75001 PARIS (FR)

## Beschreibung

Die vorliegende Erfindung betrifft ein Verfahren zum Steuern eines Roboters, einen Roboter und ein Computerprogrammprodukt.

In den meisten Mensch-Roboter-Kollaborations-(MRK)-Applikationen besteht durch die Maschine eine potentielle Gefährdung für Menschen und/oder Prozesse. In diesen Fällen werden Maßnahmen getroffen, um dieses (Verletzungs-)Risiko auf ein tolerierbares Minimum zu reduzieren. Eine Form der Risikominimierung stellt die funktional sichere Kraft- und Drehmoment-Überwachung dar, welche die auftretende Kraft nach fest definierten Grenzen beschränkt und somit die Gefahr von Stößen und Quetschungen verringert. Diese Überwachung soll mit an Sicherheit grenzender Wahrscheinlichkeit Kräfte, die außerhalb des definierten Grenzbereiches liegen, erkennen und verhindern. Als Reaktion darauf kann das Gesamtsystem in einen sicheren Zustand übergehen. Aus diesem Grund soll die Überwachung der Kraftgrenzen eine Robustheit gegenüber Fehlern aufweisen, damit ein potentielles Risiko trotz eines möglichen Ausfalls von Systemkomponenten verhindert werden kann. Diese funktionale Sicherheit wird im Allgemeinen durch das Verwenden von Redundanzen im System sichergestellt.

Nach ISO TS 15066 bzw. ISO 10218 wird das Problem der Einhaltung von Kraft- und Drehmomentgrenzen bisher auf zwei unterschiedliche Weisen gelöst.

In der ersten Variante werden die potentiell auftretenden Kräfte durch eine Leichtbauweise und eine baulich bedingte Begrenzung der Kräfte und Drehmomente der Motoren realisiert.

Die zweite Variante erfolgt durch eine funktional sichere Messung und Prüfung der auftretenden Kräfte mithilfe einer mehrkanaligen und somit funktional sicheren Drehmomentmessung in den jeweiligen Achsen des Roboters. Für die Berechnung der anliegenden Kräfte sollen neben den gemessenen Drehmomenten und Kräften der Maschinenelemente zusätzlich die Positions- und Geschwindigkeitswerte ebenfalls funktional sicher ermittelt werden. Somit kann das dynamische Verhalten des betrachteten Systems korrekt bestimmt und interpretiert werden. Die Überwachung der anliegenden Kräfte beruht auf einer Kleiner-Gleich-Prüfung, welche den Betrag der resultierenden Differenzkraft mit dem berechneten Schwellwert vergleicht. Der Schwellwert für die Überwachung ist derart festgelegt, dass die Grenzwerte der Kraftüberwachung sicher eingehalten werden. Die funktional sichere Erfassung der Messwerte mithilfe von redundanten, insbesondere mehrkanaligen Sensoren ist vergleichsweise kostenaufwendig.

Vor diesem Hintergrund besteht eine Aufgabe der vorliegenden Erfindung darin, einen verbesserten Ansatz bereitzustellen.

Demgemäß wird ein Verfahren zum Steuern eines Roboters bereitgestellt aufweisend zumindest einen Endeffektor, insbesondere im Bereich der Mensch-Roboter-Kollaborationen, mit den Schritten:

a) Ermitteln eines Kraft-Erwartungs-Werts ($M(q)\ddot{q}+C(q,\dot{q})+ g(q)-\tau_R$) an dem Endeffektor oder in Bezug auf diesen in Abhängigkeit einer gemessenen Ist-Position $q$ des Endeffektors oder sonstigen Teilen des Roboters,
b) Messen eines Kraft-Ist-Werts $\tau_m$ an dem Endeffektor oder in Bezug auf diesen,
c) Bilden einer Differenz aus dem Kraft-Erwartungs-Wert ($M(q)\ddot{q}+C(q,\dot{q})+g(q)-\tau_R$) und dem Kraft-Ist-Wert $\tau_m$, und
d) Überführen des Endeffektors in einen sicheren Zustand in Abhängigkeit der Differenz und eines ermittelten Toleranzwerts $\tau_{F,max}$,

wobei der Toleranzwert $\tau_{F,max}$ vor Schritt a) ermittelt wird und geeignet ist, einen Fehler bei der Messung des Kraft-Ist-Werts $\tau_m$ zu detektieren.

Indem der Toleranzwert festgelegt und dessen Einhaltung überwacht wird, können kritische von unkritischen Differenzen (ermittelt in Schritt c)) unterschieden werden. Unkritische Differenzen sind dabei solche, die sich aufgrund von Mess- und Modellierungsunsicherheiten nicht vermeiden lassen und daher hinzunehmen sind (im Weiteren "akzeptierte Toleranz"). Kritische Differenzen dagegen sind solche, bei denen mit an Sicherheit grenzender Wahrscheinlichkeit ein Sensorfehler vorliegt. Diese Sicherheit rührt aus der Tatsache, dass bei einem fehlerhaften Sensor keine signifikante - jedenfalls nicht über eine Vielzahl von Abtastpunkten hinweg - Übereinstimmung zwischen dem Kraft-Erwartungs-Wert und dem Kraft-Ist-Wert besteht.

Somit kann auf eine funktional sichere, insbesondere redundante Messung des Kraft-Ist-Werts verzichtet werden. Entsprechend können kostengünstigere Sensoren verwendet werden.

Sowohl die Ist-Position des Endeffektors wie auch der Kraft-Ist-Wert können mittelbar oder unmittelbar gemessen oder ermittelt werden. Zum Beispiel kann die Ist-Position des Endeffektors unmittelbar mithilfe von Überwachungskameras erfasst werden. Genauso kann die Ist-Position aus gemessenen Gelenkpositionen mittelbar errechnet werden. Entsprechendes gilt für den Kraft-Ist-Wert: Dieser kann mittels Kraftmessdosen oder dergleichen direkt am Endeffektor gemessen oder aus den in den Gelenken gemessenen Kraft-Ist-Werten errechnet werden. Unter "Gelenken" sind vorliegend die mechanischen Einrichtungen zu verstehen, welche eine Bewegung des Endeffektors in bis zu sechs Freiheitsgraden ermöglichen (Bewegungsachsen).

Für jeden gemessenen Kraft-Ist-Wert wird vorzugsweise ein entsprechender Kraft-Erwartungs-Wert ermittelt bzw. gebildet.

Der Endeffektor ist beispielsweise ein Greifer.

Mit den sonstigen Teilen des Roboters sind insbesondere ein oder mehrere Gelenke des Endeffektors gemeint.

Der Roboter weist einen Antrieb, beispielsweise ein Elektromotor, zum Antreiben des Endeffektors auf. Die von dem Antrieb erzeugte Kraft ist für den an dem Endeffektor gemessenen Kraft-Ist-Wert mit ursächlich (neben der Massenträgheit, Gravitation, Reibung etc.).

Unter "Kraft" wird vorliegenden eine Kraft und/oder ein Drehmoment verstanden, soweit nichts Gegenteiliges angegeben ist.

Gemäß einer Ausführungsform wird der Toleranzwert $\tau_{F,max}$ in Abhängigkeit einer maximalen zulässigen Kraft $\tau_{max}$ ermittelt, welche der Roboter auf ein Kollaborationsobjekt aufbringen darf. Die maximal zulässige Kraft kann beispielsweise als Axialkraft festgelegt sein.

Dadurch können Schäden oder Verletzungen am Kollaborationsobjekt vermieden werden. Der Toleranzwert ist stets niedriger als die maximal zulässige Kraft gewählt.

Gemäß einer weiteren Ausführungsform beträgt der Toleranzwert $\tau_{F,max}$ kleiner gleich die Hälfte der maximal zulässigen Kraft $\tau_{max}$.

Dadurch wird vorteilhaft sichergestellt, dass die tatsächlich auf das Kollaborationsobjekt ausgeübte Kraft zum Zeitpunkt der Erkennung der Grenzüberschreitungen $\tau_{F,max}$ stets unter der maximal zulässigen Kraft liegt. Mit anderen Worten wird so vermieden, dass sich der gemessene Kraft-Ist-Wert zusammen mit der akzeptierten Toleranz zu einem tatsächlichen Kraftwert addieren, der über der maximal zulässigen Kraft liegt.

Gemäß einer weiteren Ausführungsform wird der Endeffektor dann in den sicheren Zustand überführt, wenn festgestellt wird, dass

$$|M(q)\,\ddot{q} + C(q,\dot{q}) + g(q) - \tau_m - \tau_R| > \tau_{F,max},$$

wobei:

$\dot{q}$: die erste Ableitung der Ist-Position ist,
$\ddot{q}$: die zweite Ableitung der Ist-Position ist,
$M(q)$: den Trägheitsterm bezogen auf die Bewegung am Endeffektors darstellt,
$C(q,\dot{q})$: den Coriolis- und Zentripetalterm bezogen auf die Bewegung am Endeffektors darstellt,
$g(q)$: den Gravitationsterm in Bezug auf den Endeffektor darstellt, und
$\tau_R$: die der Bewegung des Endeffektors entgegenwirkende Roboter-interne Reibkraft ist.

Mithilfe dieser Gleichung können kritische Differenzen von unkritischen einfach und sicher unterschieden werden.

Gemäß einer weiteren Ausführungsform wird der Endeffektor weiterhin in einen sicheren Zustand in Abhängigkeit der Differenz und der maximal zulässigen Kraft $\tau_{max}$ abzüglich des Toleranzwerts $\tau_{F,max}$ überführt.

Entsprechend wird der Roboter in einen sicheren Zustand überführt, wenn Verletzungen oder Schäden am Kollaborationsobjekt drohen. Dies stellt ein zweites Kriterium dar, um den Roboter abzuschalten. Das erste Kriterium dient dagegen dazu, den Roboter abzuschalten, wenn ein Sensorfehler erkannt wird. Das zweite Kriterium kann verwendet werden, um das erste Kriterium dahingehend zu ergänzen, dass im Rahmen der akzeptierten Toleranz keine Überschreitungen der maximal zulässigen Kraft auftreten, da diese rechtzeitig detektiert würden.

Gemäß einer weiteren Ausführungsform wird der Endeffektor dann weiterhin in den sicheren Zustand überführt, wenn festgestellt wird, dass

$$|M(q)\,\ddot{q} + C(q,\dot{q}) + g(q) - \tau_m - \tau_R| > \tau_{max} - \tau_{F,max},$$

wobei:

$\dot{q}$: die erste Ableitung der Ist-Position ist,
$\ddot{q}$: die zweite Ableitung der Ist-Position ist,
$M(q)$: den Trägheitsterm bezogen auf die Bewegung am Endeffektors darstellt,
$C(q,\dot{q})$: den Coriolis- und Zentripetalterm bezogen auf die Bewegung am Endeffektors darstellt,
$g(q)$: den Gravitationsterm in Bezug auf den Endeffektor darstellt, und
$\tau_R$: die der Bewegung des Endeffektors entgegenwirkende Roboter-interne Reibkraft ist.

Mithilfe dieser Gleichung kann einfach und sicher vermieden werden, dass im Rahmen der akzeptierten Toleranz keine Überschreitungen der maximal zulässigen Kraft auftreten.

Gemäß einer weiteren Ausführungsform wird der Kraft-Ist-Wert $\tau_m$ mithilfe eines einkanaligen Kraftsensors und/oder die Ist-Position $q$ des Endeffektors mithilfe eines funktional sicheren Positionssensors erfasst.

Funktional sicher meint eine ausfallsichere, insbesondere redundante und/oder mehrkanalige Erfassung eines Messwerts. "Einkanalig" meint, dass der gleiche Messwert nur einmal erfasst wird und insbesondere nicht ausfallsicher (insbesondere nicht redundant).

Gemäß einer weiteren Ausführungsform werden die Schritte a) - d) zyklisch wiederholt.

Die Wiederholung kann insbesondere mit einer Frequenz von größer 10 Hz erfolgen. Die Frequenz wird so gewählt, dass ein Sensorfehler hinreichend schnell erkannt werden kann, bevor es zu einer Überschreitung der maximal zulässigen Kraft kommt bzw. eine potentielle Überschreitung dieser nicht erkannt wird.

Gemäß einer weiteren Ausführungsform ist der Kraft-Erwartungs-Wert ($M(q)\ddot{q}+C(q,\dot{q})+g(q)-\tau_R$) in Abhängigkeit der Ist-Position $q$ des Endeffektors oder der sonstigen Teile des Roboters und einer oder mehrerer der nachfolgenden Paramater ausgewählt: Kinematikgeometrie, Masse, Trägheitsmoment und Reibungskoeffizient, jeweils des Roboters oder Teilen davon.

Gemäß einer weiteren Ausführungsform steht der Endeffektor in dem sicheren Zustand still, und zusätzlich sind seine Bewegungsachsen fixiert oder frei.

Die Bewegungsachsen sind dann fixiert, wenn ein Fallenlassen einer vom Endeffektor gehaltenen Last zu befürchten ist. Die Bewegungsachsen sind frei, wenn ein Einklemmen einer Person droht. Ob die Achsen fixiert oder frei sind, hängt vom Einzelfall ab und wird in bekannter Weise in der Steuer-Einheit des Roboters festgelegt.

Gemäß einer weiteren Ausführungsform werden die Achsen des Endeffektors zu unterschiedlichen Zeitpunkten verfahren und/oder es wird die maximal zulässige Kraft $\tau_{max}$ für jede Achse separat festgelegt.

Dadurch vereinfacht sich die Steuerung, da die Kräfte für jede Achse einzeln mit der maximal zulässigen Kraft verglichen werden können, und keine resultierenden Kräfte aufgrund von Mehrachsbewegungen ermittelt werden sollen.

Gemäß einem weiteren Aspekt wird bereitgestellt ein Roboter, insbesondere für eine Mensch-Roboter-Kollaboration, mit:

einem Endeffektor,
einer Ermittelungs-Einheit zum Ermitteln eines Kraft-Erwartungs-Werts ($M(q)\ddot{q}+C(q,\dot{q})+g(q)-\tau_R$) an dem Endeffektor oder in Bezug auf diesen in Abhängigkeit einer Ist-Position $q$ des Endeffektors oder sonstigen Teilen des Roboters,
einer Mess-Einheit zum Messen eines Kraft-Ist-Werts $\tau_m$ an dem Endeffektor oder in Bezug auf diesen,
einer Rechner-Einheit zum Bilden einer Differenz aus dem Kraft-Erwartungs-Wert ($M(q)\ddot{q}+C(q,\dot{q})+g(q)-\tau_R$) und dem Kraft-Ist-Wert $\tau_m$,
einer Bereitstell-Einheit zum Bereitstellen eines Toleranzwerts $\tau_{F,max}$, wobei der Toleranzwert $\tau_{F,max}$ geeignet ist, einen Fehler bei der Messung des Kraft-Ist-Werts $\tau_m$ zu detektieren, und
einer Sicherheits-Einheit zum Überführen des Endeffektors in einen sicheren Zustand in Abhängigkeit der Differenz und des bereitgestellten Toleranzwerts $\tau_{F,max}$.

Die jeweilige Einheit oder Einrichtung, zum Beispiel die Ermittelungs-Einheit, die Mess-Einheit oder die später genannte Reglereinrichtung, können hardwaretechnisch und/oder auch softwaretechnisch implementiert sein. Bei einer hardwaretechnischen Implementierung kann die jeweilige Einheit oder Einrichtung als Vorrichtung oder als Teil einer Vorrichtung, zum Beispiel als Computer oder als Mikroprozessor ausgebildet sein. Bei einer softwaretechnischen Implementierung kann die jeweilige Einheit oder Einrichtung als Computerprogrammprodukt, als eine Funktion, als eine Routine, als Teil eines Programmcodes oder als ausführbares Objekt ausgebildet sein.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Verfahren beschriebenen Ausführungsformen und Merkmale gelten für den vorgeschlagenen Roboter entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 zeigt eine Mensch-Roboter-Kollaboration gemäß einem Ausführungsbeispiel;

Fig. 2 zeigt eine Reglereinrichtung des Roboters aus Fig. 1;

Fig. 3 zeigt ein Verfahren gemäß einem Ausführungsbeispiel, welches von der Reglereinrichtung aus Fig. 2 ausgeführt wird;

Fig. 4 zeigt eine beispielhafte Mechanik; und

Figuren 5 - 7 zeigen verschiedene Kraft-Ist-Werte und Kraft-Erwartungs-Werte über die Zeit.

In den Figuren sind gleiche oder funktionsgleiche Elemente mit denselben Bezugszeichen versehen worden, sofern nichts anderes angegeben ist.

Fig. 1 zeigt einen Roboter 10 für eine Mensch-Roboter-Kollaboration (MRK). Hierunter versteht man, dass Mensch - hier mit dem Bezugszeichen 12 bezeichnet - und Roboter 10 sich einen Arbeitsraum ohne trennende Schutzeinrichtung teilen.

Der Roboter 10 weist einen Endeffektor 14, hier im Beispiel in Form eines Greifers, auf. Mithilfe des Endeffektors 14 führt der Roboter 10 Tätigkeiten aus, die insbesondere eine Interaktion mit dem Menschen 12 umfassen können. Beispielsweise kann der Roboter 10 mittels seines Endeffektors 14 dem Menschen 12 Speisen oder dergleichen reichen.

Zwecks Ausführung der genannten Tätigkeiten weist der Roboter 10 einen Antrieb 16 auf, welcher dazu eingerichtet ist, den Endeffektor 14 anzutreiben. Der Antrieb 16 kann ein oder mehrere Elektromotoren aufweisen. Mittels des Antriebs 16 ist der Endeffektor 14 entlang einer oder mehrerer Bewegungsachsen und/oder um diese bewegbar (insgesamt also bis zu sechs Freiheitsgrade, von denen drei translatorisch und drei rotatorisch sein können). Die Bewegungsachsen sind vorliegend mit x, y und z bezeichnet. Die Bewegung umfasst beispielsweise ein Beschleunigen, Abbremsen, Halten, Drücken, Ziehen usw. von allgemein als Kollaborationsobjekte bezeichneten Gegenständen. Bei den Gegenständen kann es sich beispielsweises um den Menschen selbst, aber auch jeden anderen Gegenstand handeln, insbesondere einen Teller, ein medizinisches Instrument etc.

Der Roboter 10 weist ferner eine in Fig. 2 gezeigte Reglereinrichtung 20 auf, welche diesen, d.h. insbesondere dessen Antrieb 16, zur Ausführung der gewünschten Bewegungen entlang und/oder um die Bewegungsachsen x, y und z ansteuert. Ein von der Reglereinrichtung 22 ausgeführtes Verfahren 300 ist in Fig. 3 gezeigt.

Von besonderer Bedeutung ist nun - mangels den Arbeitsraum unterteilender Schutzeinrichtungen -, dass der Roboter 10 unter keinen Umständen Menschen verletzt oder Gegenstände beschädigt. Hierfür ist grundsätzlich eine funktional sichere Erfassung der von dem Roboter 10 auf seine Umgebung ausgeübten Kräfte erforderlich. Andererseits soll die Sensorik preiswert und daher wenig komplex sein.

Vor diesem Hintergrund weist die Reglereinrichtung 20 eine Ermittelungs-Einheit 22 zum kontinuierlichen Ermitteln von Kraft-Erwartungs-Werten gemäß der Gleichung $M(q)\ddot{q}+C(q,\dot{q})+ g(q)-\tau_R$ an angetriebenen Gelenken 18 des Roboters 10 in Abhängigkeit von Ist-Positionen $q$ derselben (Schritt 302 in Fig. 3). In der vorstehenden Gleichung ist $\dot{q}$ die erste Ableitung der Ist-Position $q$, $\ddot{q}$ die zweite Ableitung der Ist-Position $q$, $M(q)$ der Trägheitsterm bezogen auf die Bewegung am Endeffektors 14, $C(q,\dot{q})$ der Coriolis- und Zentripetalterm bezogen auf die Bewegung am Endeffektors 14, $g(q)$ der Gravitationsterm in Bezug auf den Endeffektor 14, und $\tau_R$ die der Bewegung des Endeffektors 14 entgegenwirkende Roboter-interne Reibkraft.

Aus den ermittelten Kraft-Erwartungs-Werten wird modelliert, welche Kraft (was vorliegend auch stets ein Drehmoment einschließt) zum Bewegen des Endeffektors 14 entlang eines im Vorhinein bekannten Pfads erwartbar erforderlich ist. "Im Vorhinein" ist dahingehend zu verstehen, dass der Pfad inklusive Beschleunigungen vor Schritt 302 definiert, insbesondere auf der Reglereinrichtung 20 gespeichert ist.

Die Ermittlungs-Einheit 22 umfasst ein oder mehrere Positionssensoren 24, welche die Ist-Positionen $q$ entlang und/oder um die Bewegungsachsen x, y und z erfassen. Die Ist-Positionen q werden in einem Speicher 26 zwischengespeichert. Aus diesen werden sodann die Geschwindigkeit $\dot{q}$ und die Beschleunigung $\ddot{q}$ in einer Rechner-Einheit 28 errechnet. In einer weiteren Rechner-Einheit 30 werden unter anderem aus den Bewegungsdaten $q,\dot{q},\ddot{q}$ sowie den Parametern P (insbesondere in Matrizenform) Kinematikgeometrie, Massen, Trägheitsmomente, Reibungskoeffizienten die Bewegungsgleichungen (siehe oben) des Roboters 10 ermittelt und sodann die Kraft-Erwartungs-Werte ermittelt. Die Kraft-Erwartungs-Werte können in einem Speicher 32 zwischengespeichert werden.

Weiter umfasst die Reglereinrichtung 20 eine Mess-Einheit 34 zum Messen von Kraft-Ist-Werten $\tau_m$ in den Gelenken 18 (Schritt 304 in Fig. 3). Daraus werden die zum Bewegen des Endeffektors 14 von dem Antrieb 16 aufgebrachten Kräfte ermittelt. Die Mess-Einheit 34 kann ein oder mehrere Kraftsensoren zum Messen der Kraft-Ist-Werte

$\tau_m$ entlang und/oder um die Bewegungsachsen x, y und z aufweisen. Die Kraftsensoren sind insbesondere als einkanalige Sensoren ausgebildet. Die Kraftsensoren können beispielsweise als Kraftmessdosen oder Dehnmessstreifen ausgebildet sein, die eine antriebskraftbedingte Verformung von ein oder mehreren Teilen des Roboters 10 messen. Alternativ kann eine Stromaufnahme des Antriebs 16 gemessen werden und aus dieser die von diesem erzeugte Kraft errechnet werden. Auch weitere Möglichkeiten zur Erfassung des Kraft-Ist-Werts sind vorliegend nicht ausgeschlossen. Die gemessenen Kraft-Ist-Werte $\tau_m$ können in einem Speicher 36 zwischengespeichert werden.

In einer Rechner-Einheit 38 der Reglereinrichtung 20 wird eine Differenz (wovon vorliegend jede Form des Vergleichs umfasst ist) aus dem Kraft-Erwartungs-Wert ($M(q)\ddot{q}+C(q,\dot{q})+g(q)-\tau_R$) und dem Kraft-Ist-Wert $\tau_m$ gebildet (Schritt 306 in Fig. 3).

Eine Bereitstell-Einheit 40 der Reglereinrichtung 20 stellt einen Toleranzwert $\tau_{F,max}$ insbesondere für jeden Freiheitsgrad bereit. Dieser kann auf einem Speicher 42 vorgehalten werden. In einer Rechner-Einheit 44 kann eine Umrechnung von Kraft-Grenzwerten (bezüglich der jeweiligen Bewegungsachsen) auf entsprechende Kraft-/Drehmomente in den Gelenken 18 erfolgen. Die Ermittlung des Toleranzwerts $\tau_{F,max}$ erfolgt vor Beginn der Regelung (in einem dem Schritt 302 vorausgehenden Schritt 300), insbesondere kann dieser bereits werksseitig vor Auslieferung des Roboters 10 oder in einem Kalibrierschritt vor Inbetriebnahme des Roboters 10 eingestellt werden.

Eine Sicherheits-Einheit 46 der Reglereinrichtung 20 fährt den Endeffektor 14 in einem Schritt 308 (Fig. 3) in einen sicheren Zustand in Abhängigkeit der Differenz und dem bereitgestellten Toleranzwert $\tau_{F,max}$. Der Endeffektor 14 steht in dem sicheren Zustand still. Zusätzlich sind seine Bewegungsachsen x, y und z (d.h. Translation entlang dieser sowie Rotation um diese) gesperrt oder frei. Dies je nach Anforderung, ob beispielsweise ein Fallenlassen einer Last verhindert oder ein Einklemmen einer Person vermieden werden soll.

Die Schritte 302 - 308 werden zyklisch ausgeführt und insbesondere mit einer Frequenz von größer 10 Hz, bevorzugt größer 100 Hz wiederholt.

Details der Regelung, insbesondere auch zur Ermittlung eines geeigneten Toleranzwerts $\tau_{F,max}$ werden nachfolgend erläutert:

Die analytische Redundanz, welche durch das vorliegende Regelungs-Modell geschaffen wird, bietet in Kombination mit redundant ermittelten Messwerten sowie einkanalig ermittelten Kräften/Drehmomenten eine Grundlage für die funktional sichere Überwachung des Gesamtsystems. Der zyklische Abgleich der ermittelten Messdaten mit den prädizierten Werten des Modells, führt zur funktional sicheren Überwachungsstrategie. Dabei werden für die Modellierung die bestehenden Bewegungsgleichungen um die weiteren Terme der Reibung $\tau_R$, sowie der möglichen Sensorfehler und sonstigen Fehler $\tau_F$ im System erweitert, was auf

$$M(q)\,\ddot{q} + C(q,\dot{q}) + g(q) \;\leq \tau_m - \tau_{ext} + \tau_R + \tau_F$$

führt. Dabei unterscheidet sich die Auswirkung der Sensorfehler von den externen Drehmomenten $\tau_{ext}$ (siehe auch Fig. 1) auf die Gleichung. Da aufgrund von Mess- und Modellierungsunsicherheiten der Wert von $\tau_F$ nie vollständig verschwindet, soll die Überwachung diesen bis zu einem bestimmten Toleranzbereich [$-\tau_{F,max}$; $+\tau_{F,max}$] ignorieren und gleichzeitig in den Schwellwerten berücksichtigen. Innerhalb dieses Bereichs dürfen alle noch tolerierbaren Unsicherheiten selbst in der schlimmst möglichen Kombination keine Gefahr darstellen. Es sollen daher folgende beide Bedingungen für die Überwachung jeweils zeitgleich für alle Achsen erfüllt sein:

1) Für alle möglichen Unsicherheiten innerhalb des zulässigen Bereichs [$-\tau_{F,max}$; $+\tau_{F,max}$] sollen externen Kräfte und Momente $\tau_{ext}$ erkannt werden, bevor sie den maximalen Schwellwert $\tau_{max}$ überschreiten. $\tau_{max}$ ist dabei beispielsweise die bei der Interaktion mit der Person 12 (Fig. 1) maximal zulässige Kraft, ohne dass Verletzungen bei dieser drohen.

2) Das Überschreiten der Unsicherheiten $\tau_F$ über das Niveau von [$-\tau_{F,max}$; $+\tau_{F,max}$] soll erkannt werden und ein sicherer Zustand eingeleitet werden.

Die Überwachung der Drehmomentgrenzen wird somit durch den Vergleich

$$|M(q)\,\ddot{q} + C(q,\dot{q}) + g(q) - \tau_m - \tau_R| \;\leq \tau_{max} - \tau_{F,max} \qquad (1.1)$$

realisiert, wobei hier einerseits immer die Toleranz $\tau_{F,max}$ abgezogen werden soll, damit das Erkennen trotz aller möglichen Fehler innerhalb des Bereichs [$-\tau_{F,max}$; $+\tau_{F,max}$] vor der tatsächlichen Überschreitung stattfindet. Zusätzlich wird jederzeit das Auftreten möglicher Fehler durch den Vergleich

$$|M(q)\,\ddot{q} + C(q,\dot{q}) + g(q) - \tau_m - \tau_R| \le \tau_{F,max} \qquad (1.2)$$

überwacht. Zur Vereinfachung der beiden Bedingungen, wird zusätzlich die Ungleichung

$$\tau_{max} - \tau_{F,max} > \tau_{F,max} \qquad (1.3)$$

festgelegt, da somit (1.1) immer erfüllt ist, solange (1.2) erfüllt ist. Daher reicht es für die sichere Überwachung aus, nur (1.2) zu prüfen.

Entscheidend für das Erfüllen der Bedingungen ist jedoch wie $\tau_{F,max}$ zu dimensionieren ist. Daher wird $\tau_{F,max}$ nicht entsprechend von möglichen Unsicherheiten im Sensor ausgelegt, sondern direkt aus den Grenzwerten der Kräfte $\tau_{F,max}$ und den möglichen Unsicherheiten $\tau_{num\ Fehler}$ durch eine numerische Berechnung festgelegt. Der Grenzwert $\tau_{F,max}$ kann somit entsprechend dem Zusammenhang

$$\Rightarrow \tau_{F,max} < \frac{\tau_{max}}{2} - \tau_{num\ Fehler} \qquad (1.4)$$

bestimmt werden, wodurch die beiden Bedingungen (1.1) und (1.2) immer erfüllt werden. Während der Überwachung wird jederzeit überprüft, ob ein Fehler aufgetreten ist, der größer als $\tau_{F,max}$ ist. In diesem Fall wird das System abgeschaltet bzw. in einen sicheren Zustand gebracht. Sind die maximalen axialen Drehmomente $\tau_{max}$ jeweils bekannt, können die Grenzwerte für $\tau_{F,max}$ direkt entsprechend (1.4) bestimmt werden und der Roboter durch den Vergleich (1.2) sicher überwacht werden. Es sei an dieser Stelle angemerkt, dass jeder Wert $\tau_{F,max} < \frac{\tau_{max}}{2} - \tau_{num\ Fehler}$ ebenfalls für die sichere Überwachung geeignet ist und für eine sensitivere Erkennung verwendet werden kann, da nur aus der Überschreitung der Grenze $\frac{\tau_{max}}{2} - \tau_{num\ Fehler}$ ein Sicherheitsrisiko entstehen kann.

Weiterhin wird vorzugsweise zusätzlich zu den bisherigen Anforderung in der Bewegung sichergestellt, dass sich das zu erwartende Drehmoment, welches aus $M(q)\ddot{q}+C(q,\dot{q})+g(q)-\tau_R$ für einen vorgegebenen Verlauf bestimmt werden kann, regelmäßig in der Bewegung um mindestens $2 \times \tau_{F,max}$ verändert. Das ist erforderlich um auch mögliche "stuck at value"-Fehler (eingefrorene Messwerte) während der Bewegung zu erkennen und das System im Fehlerfall in den sicheren Zustand zu bringen. Da der Messwert des Drehmoments $\tau_m$ immer dem erwarteten Drehmoment folgt und innerhalb der Schranken bleiben soll, können Fehler im gemessenen Drehmoment, welche betragsmäßig größer als $\tau_{F,max}$ sind somit im laufenden Betrieb ausgeschlossen werden, solange die Änderungen im Drehmoment regelmäßig erfolgen. Die Zeit um die sich der erwartete Momentenverlauf $M(q)\ddot{q}+C(q,\dot{q})+g(q)-\tau_R$ nicht ausreichend verändert entspricht der maximalen Zeit, in der ein Fehler unentdeckt bleiben kann. Dieser Wert ist für die abschließende Sicherheitsbetrachtung relevant. Hierbei ist entscheidend, dass diese Dauer hinreichend klein ist, im Vergleich zur durchschnittlichen Dauer bis zum Auftreten einer möglichen Kollision. In diesem Fall lässt sich mit einer ausreichenden Wahrscheinlichkeit ausschließen, dass zwischen der Zeit in der ein Fehler auftritt und der Zeit bis dieser erkannt wurde, eine Kollision auftritt, welche aufgrund des noch unerkannten Fehlers möglicherweise zu einer überhöhten Kraft führt. Eine Ausnahme stellt in dieser Betrachtung jedoch der erwartete Stillstand dar. In diesem Fall darf auch über einen längeren Zeitraum hinweg das erwartete Drehmoment konstant bleiben, da vom Roboter in diesem Fall keine Gefahr ausgehen kann. Sobald sich jedoch der Roboter in Bewegung setzt, soll sich das erwartete Drehmoment um mindestens $2 \times \tau_{F,max}$ ändern. Kann bei der allgemeinen Bewegung die regelmäßige Änderung um $2 \times \tau_{F,max}$ für den vorgegebenen Verlauf nicht sichergestellt werden, sind weitere Maßnahmen, wie zum Beispiel eine Verringerung von $\tau_{F,max}$ oder Anpassungen an der Bewegung notwendig. Werden jedoch alle Kriterien eingehalten und auch sichergestellt, dass in jeder zu prüfenden Achse $\tau_{F,max} < \frac{\tau_{max}}{2} - \tau_{num\ Fehler}$ ist, so kann mit diesem Verfahren eine funktional sichere Überwachung ausschließlich auf Basis der vorhandenen sicheren Positionen und nicht-funktional-sicher-ermittelten Drehmomentwerten erfolgen.

Der modellbasierte Ansatz führt zu einer Prüfung der vorhandenen Messwerte und damit einhergehend zu einer analytischen Redundanz. Diese wird für die Reduktion des Messaufwands genutzt, ohne eine Einschränkung in der Sicherheitsbetrachtung aufzuweisen. Die Verlagerung von physikalischer Redundanz hin zu analytischer wirkt sich deutlich auf den Aufwand von Komponenten in der Applikation aus. Anstelle einer aufwändigen redundanten Messung von Kräften, die mitunter nach bestehendem Stand der Technik schwer realisierbar ist und stets einen erheblichen Eingriff in die bestehende Applikation erfordert, kann ein mechanisch unverändertes System verwendet werden. Dies stellt einen erheblichen Vorteil aus Sicht der Produktionsvarianz und Modularisierung dar. Das analytische Verfahren basiert ausschließlich auf ohnehin vorhandenen, teilweise auch zweikanalig ermittelten Sensorwerten und einer in funktional sicherer Software realisierten modellbasierten Überwachung. Durch das Ausnutzen der bereits vorhandenen Größen kann, ohne eine Veränderung der bestehenden Kinematik, eine fehlersichere Kraft- und Momentüberwachung ergänzt werden.

Werden für den Roboter 10 bzw. Endeffektor 14 die maximalen axialen Drehmomente $\tau_{max}$ nicht durch die Applikation gegeben, sondern lediglich eine maximale Kraft $F_{max}$ am Endeffektor (TCP) definiert, so soll für den Roboter sowohl $\tau_{F,max}$ als auch $\tau_{max}$, jeweils für die Bewegung bestimmt werden. Da aufgrund der zulässigen Schranken $\tau_{F,max}$ jederzeit Abweichungen aller Drehmomente in den jeweiligen Achsen innerhalb der Grenzen $\tau_{F,max}$ toleriert werden, ist es erforderlich dies bei der Betrachtung der Überwachung der Gesamtkraft zu berücksichtigen. Es soll somit sichergestellt werden, dass sogar für den schlimmst möglichen Fall, bei dem die zusätzlichen Fehler noch innerhalb aller Toleranzen liegen, immer noch ein sicherer Zustand eingeleitet wird, bevor eine kritische Kraft die maximalen Grenzen überschreitet.

Es besteht dabei jedoch immer die Möglichkeit zunächst einen Wert $\tau_{max}$ als konservativen Grenzwert zur Überwachung aller einzelnen Achsen zu bestimmen und anschließend entsprechend dem Ansatz in (1.4) den Wert von $\tau_{F,max}$ festzulegen. Dadurch wird die Kraftüberwachung wieder auf eine Drehmomentüberwachung überführt und entsprechend dem bereits beschriebenen Ansatz durchgeführt.

Ein mögliches Vorgehen wäre hierbei zunächst den maximalen Wert $\tau_{max}$ für einen beliebigen Roboter über das Optimierungskriterium

$$\max\left\{\tau_{max} > 0 \;\middle|\; \left\|\underbrace{\left(\left(\frac{\partial x_{TCP}(q)}{\partial q}\right)^{T}\right)^{\dagger}}_{Auswirkung\ M_a(q)} \tau_{max}\right\| < \|F_{max}\|\right\} \quad (2.5)$$

zu bestimmen. Hierbei wird die Auswirkung $M_a(q)$ durch die generalisierte Moore-Penrose-Inverse der transponierten Matrix der partiellen Ableitung $\frac{\partial x_{TCP}(q)}{\partial q}$ der Endeffektorposition in Abhängigkeit von den Achskoordinaten $q$ nach $q$ gebildet. Der Betrag des Vektors $M_a(q)\tau_{max}$ soll dabei für alle möglichen Achspositionen $q$ kleiner sein als der Betrag $\|F_{max}\|$. Dabei kann $\tau_{max}$ aus dieser rein mathematischen Formulierung und den möglichen Achspositionen $q$ für die Applikation bestimmt werden. Durch anschließende Berechnung entsprechend (1.4) kann $\tau_{F,max}$ für die sichere Überwachung bestimmt werden. An dieser Stelle soll erwähnt werden, dass keine Singularitäten im Bewegungsraum auftreten dürfen (Durchgestreckte Gelenke des Roboters und Singularität in der Kraftübertragung), da in diesem Fall bei kleinen Drehmomenten sehr hohe Kräfte auftreten können und eine Kraftüberwachung über die einzelnen Achsen nicht mehr sinnvoll wäre. Diese Bewegungen werden auch bei anderen Verfahren, welche auf Basis von Achsdrehmomenten eine Kraftüberwachung realisieren, ausgeschlossen oder werden gesondert behandelt.

Ein Beispiel für eine Dimensionierung wird anhand der in Fig. 4 dargestellten Kinematik realisiert. Hierbei handelt es sich um ein System mit einer Linearachse in horizontaler Richtung ($q_1$) und einer Rotationsachse um den beweglichen Wagen mit der Achskoordinate ($q_2$). Soll nun am TCP eine maximale Kraft $F_{max}$ überwacht werden, lässt sich für einem Bewegungsraum von $q_1 \in [q_{1,min}, q_{1,max}]$ und $q_2 \in [0, \frac{\pi}{4}]$ der Grenzwert von $\tau_{max,1}$ und $\tau_{max,2}$ über den Zusammenhang (2.1) durch

$$\frac{\sqrt{l^2\,\tau_{max,1}^2 + 2\sin(q_2)\,l\tau_{max,1}\tau_{max,2} + \tau_{max,2}^2}}{l\,|\cos(q_2)|} < F_{max} \quad (2.6)$$

berechnen. Durch eine Abschätzung der Gleichung kann die Vereinfachung

$$\frac{\sqrt{l^2\,\tau_{max,1}^2 + 2\sin(q_2)\,l\tau_{max,1}\tau_{max,2} + \tau_{max,2}^2}}{l\,|\cos(q_2)|} < \frac{\sqrt{(|l\,\tau_{max,1}| + |\tau_{max,2}|)^2}}{\frac{\sqrt{2}}{2}l} < F_{max} \qquad (2.7)$$

getroffen werden und somit als konservative und sichere Abschätzung die Werte $\tau_{max,1} = \frac{F_{max}}{2\sqrt{2}}$ und $\tau_{max,2} = \frac{F_{max}}{2\sqrt{2}}l$ gewählt werden, welche für alle möglichen Positionen für $q_1$ und $q_2$ die Grenzwerte bezüglich $F_{max}$ einhalten. Entsprechend dem Zusammenhang (1.4) lassen sich anschließend ausgehend von $\tau_{max,1}$ und $\tau_{max,2}$ die Grenzen $\tau_{F,\mathrm{max1}}$ und $\tau_{F,\mathrm{max2}}$ jeweils für die einzelnen Achsen entsprechend zu

$$\begin{aligned}\tau_{F,max1} &= \frac{F_{max}}{4\sqrt{2}} - \tau_{num\,Fehler1}\\ \tau_{F,max2} &= \frac{F_{max}}{4\sqrt{2}}l - \tau_{num\,Fehler2}\end{aligned} \qquad (2.8)$$

bestimmen. Dieses Beispiel zeigt exemplarisch, dass das Verfahren ebenso für Kraftbeschränkungen mit $F_{max}$ angewendet werden kann. Die Kraft $F_{max}$ soll jedoch nicht bei jeder Applikation auf ein Drehmoment entsprechend dieser konservativen Abschätzung umgerechnet werden, sofern die Grenzen $\tau_{max}$ für die Achsen über alternative Berechnungen bestimmt werden können.

Da die Berechnung nach (2.1) durchaus kompliziert sein kann und oftmals nur mit numerischen Methoden sinnvoll zu bestimmen ist, ist es auch möglich durch Anpassung der Applikation oder durch andere Maßnahmen die Bestimmung von $\tau_{\mathrm{max}}$ zu vereinfachen. Es ist beispielsweise möglich, die Berechnung der maximalen Auswirkung dadurch zu vereinfachen, dass die einzelnen Achsen zu bestimmten Zeitpunkten nicht gleichzeitig verfahren und somit jeweils nur die Grenzen $\tau_{max}$ der aktuell bewegenden Achse(n) bestimmt und berücksichtigt werden sollen. Ebenso können für unterschiedliche Arbeitsbereiche und/oder Betriebszustände jeweils unterschiedliche Werte von $\tau_{max}$ und somit von $\tau_{F,max}$ entsprechend der Applikation und der Wertebereiche von $q$ definiert werden. Hierbei soll nur darauf geachtet werden, dass entsprechend beim Übergang der Arbeitsbereiche und/oder Betriebszustände jeweils bei Veränderung der Toleranzen $\tau_{F,max}$ kein Fehler unentdeckt bleibt. Dies kann beispielsweise durch eine ausreichende Änderung in der Bewegung sichergestellt werden.

Im vorgestellten Verfahren wird daher das Einhalten von Kraftgrenzen, ebenso wie der fehlerfreie Betrieb der Sensorik oder des Systems gleichzeitig überwacht. Die Überwachung der Kräfte und Drehmomente erfolgt somit mit geringeren Sehwellwerten um den Erwartungswert, wie in Fig. 5 am Beispiel der Linearbewegung dargestellt wird.

Durch die Speicherung der Messwerte über einen Zeithorizont sinkt der Einfluss von Rauschprozessen in den Messungen und numerische Fehler in der Berechnung werden minimiert. Somit wird die Wahrscheinlichkeit eines sogenannten Spurious-Trips, also eines fälschlicherweise angenommenen Fehlers, minimiert und der fehlerfreie Betrieb nicht unnötigerweise gestört. Die Schwellwerte der Fehlersignale sind jedoch immer konservativ auszulegen, damit die Detektion eines kritischen Fehlers mit an Sicherheit grenzender Wahrscheinlichkeit erfolgen kann. Es soll jedoch angemerkt werden, dass bei diesem Verfahren bereits geringere externe Kräfte, also Kräfte deutlich unterhalb der maximalen Grenzen, dazu führen können, dass ein Fehler von der Überwachung unnötigerweise gemeldet wird. Das Verfahren ist daher in alleiniger Ausführung eher für die Anwendung im Bereich Mensch-Roboter-Koexistenz gedacht, bei der eine Kollision mit einem Hindernis, insbesondere einem Menschen, unerwünscht ist und relativ selten auftreten soll. Sollte es dennoch zu einer Kollision kommen, besteht jedoch zu keinem Zeitpunkt ein Risiko für den Menschen.

Es sei weiterhin angemerkt, dass die Grenzen bei repetitiven oder ähnlichen Bewegungen mit einer höheren Präzision anhand des Referenzverlaufs ermittelt werden können. Somit kann die Sicherheit für den Menschen auch bei größeren bewegten Massen dennoch sichergestellt werden und Fehler können nach wie vor festgestellt werden.

Die folgenden Beispiele verdeutlichen die beiden Mechanismen unter denen ein Fehler detektiert werden kann. Als Beispielsystem wird dieselbe Linearbewegung mit einer Masse von 10 kg gewählt und einer Kraft von 20N, welche in ein Drehmoment von 20 Nm umgewandelt wird. Einerseits führt, wie in Fig. 6 dargestellt wird, eine Kollision zu einer Verminderung der Geschwindigkeit. Durch dieses Bremsen wird gleichzeitig der Erwartungswert der Kraft angepasst.

Gleichzeitig wird durch die Kollision die Antriebsregelung ansprechen und das Drehmoment erhöhen, wie ebenfalls in Fig. 6 dargestellt wird. Beide Effekte überlagern sich, wobei die Anpassung des errechneten Erwartungswertes und die Erhöhung des anliegenden Drehmomentes immer in entgegengesetzten Richtungen stattfindet.

Die Anpassung der Schwellwerte an den Erwartungswert ermöglicht weiterhin die Detektion von Fehlern in der Sensorik spätestens zu dem Zeitpunkt einer Kollision. Es wird somit sichergestellt, dass alle Kollisionen und somit potentiellen Gefährdungen für den Menschen und/oder den Prozess sicher erkannt werden und gleichzeitig alle weiteren Fehler in der Sensorik und/oder im System spätestens zu einer Änderung in der Bewegung oder einer Kollision erkannt werden. Insofern zeigt Fig. 7 den Verlauf des Mess- und Erwartungswerts bei einer Kollision mit einem Hindernis sowie einen weiteren Verlauf mit einem "stuck at zero" Messwertfehler.

Durch genannte Maßnahmen wird die funktional sichere Drehmoment- und Kraftsensorik überflüssig, da die gefährlichen und somit sicherheitskritischen Fehler durch den Überwachungsalgorithmus bereits festgestellt werden. Alle Abweichungen des Messwertverlaufs vom Erwartungswert unterhalb der Schwellwerte sind nicht sicherheitskritisch und stellen keine Gefahr dar. Eine Detektion dieser ist somit nicht erforderlich.

Obwohl die vorliegende Erfindung anhand von Ausführungsbeispielen beschrieben wurde, ist sie vielfältig modifizierbar.

Bezugszeichenliste

10 Roboter
12 Mensch
14 Endeffektor
16 Antrieb
18 Gelenk
20 Reglereinrichtung
22 Ermittlungs-Einheit
24 Positionssensoren
26 Speicher
28 Rechner-Einheit
30 Rechner-Einheit
32 Speicher
34 Mess-Einheit
36 Speicher
38 Rechner-Einheit
40 Bereitstell-Einheit
42 Speicher
44 Rechner-Einheit
46 Sicherheits-Einheit

P Parameter
x Achse
y Achse
z Achse

S300 - S308 Schritte

**Patentansprüche**

1. Verfahren zum Steuern eines Roboters (10) aufweisend zumindest einen Endeffektor (14), insbesondere im Bereich der Mensch-Roboter-Kollaborationen, mit den Schritten:

a) Ermitteln (S302) eines Kraft-Erwartungs-Werts ($M(q)\ddot{q}+ C(q,\dot{q})+g(q)-\tau_R$) an dem Endeffektor (14) oder in Bezug auf diesen in Abhängigkeit einer gemessenen Ist-Position $q$ des Endeffektors (14) oder sonstigen Teilen (18) des Roboters (10),
b) Messen (S304) eines Kraft-Ist-Werts $\tau_m$ an dem Endeffektor (14) oder in Bezug auf diesen,
c) Bilden (S306) einer Differenz aus dem Kraft-Erwartungs-Wert ($M(q)\ddot{q}+C(q,\dot{q})+g(q)-\tau_R$) und dem Kraft-Ist-Wert

$\tau_m$, und

d) Überführen (S308) des Endeffektors (14) in einen sicheren Zustand in Abhängigkeit der Differenz und eines ermittelten Toleranzwerts $\tau_{F,max}$,

wobei der Toleranzwert $\tau_{F,max}$ vor Schritt a) ermittelt wird (S300) und geeignet ist, einen Fehler bei der Messung des Kraft-Ist-Werts $\tau_m$ zu detektieren.

**2.** Verfahren nach Anspruch 1,
**dadurch gekennzeichnet,**
**dass** der Toleranzwert $\tau_{F,max}$ in Abhängigkeit einer maximalen zulässigen Kraft $\tau_{max}$ ermittelt wird, welche der Roboter (10) auf ein Kollaborationsobjekt (12) aufbringen darf.

**3.** Verfahren nach Anspruch 2,
**dadurch gekennzeichnet,**
**dass** der Toleranzwert $\tau_{F,max}$ kleiner gleich die Hälfte der maximal zulässigen Kraft $\tau_{max}$ beträgt.

**4.** Verfahren nach einem der Ansprüche 1 - 3,
**dadurch gekennzeichnet,**
**dass** der Endeffektor (14) dann in den sicheren Zustand überführt wird, wenn festgestellt wird, dass

$$|M(q)\,\ddot{q} + C(q,\dot{q}) + g(q) - \tau_m - \tau_R| > \tau_{F,max},$$

wobei:

$\dot{q}$: die erste Ableitung der Ist-Position ist,
$\ddot{q}$: die zweite Ableitung der Ist-Position ist,
$M(q)$: den Trägheitsterm bezogen auf die Bewegung am Endeffektors (14) darstellt,
$C(q,\dot{q})$: den Coriolis- und Zentripetalterm bezogen auf die Bewegung am Endeffektors (14) darstellt,
$g(q)$: den Gravitationsterm in Bezug auf den Endeffektor (14) darstellt, und
$\tau_R$: die der Bewegung des Endeffektors (14) entgegenwirkende Roboter-interne Reibkraft ist.

**5.** Verfahren nach einem der Ansprüche 1 - 4,
**dadurch gekennzeichnet,**
**dass** der Endeffektor (14) weiterhin in einen sicheren Zustand in Abhängigkeit der Differenz und der maximal zulässigen Kraft $\tau_{max}$ abzüglich des Toleranzwerts $\tau_{F,max}$ überführt wird.

**6.** Verfahren nach Anspruch 5,
**dadurch gekennzeichnet,**
**dass** der Endeffektor (14) dann weiterhin in den sicheren Zustand überführt wird, wenn festgestellt wird, dass

$$|M(q)\,\ddot{q} + C(q,\dot{q}) + g(q) - \tau_m - \tau_R| > \tau_{max} - \tau_{F,max},$$

wobei:

$\dot{q}$: die erste Ableitung der Ist-Position ist,
$\ddot{q}$: die zweite Ableitung der Ist-Position ist,
$M(q)$: den Trägheitsterm bezogen auf die Bewegung am Endeffektors (14) darstellt,
$C(q,\dot{q})$: den Coriolis- und Zentripetalterm bezogen auf die Bewegung am Endeffektors (14) darstellt,
$g(q)$: den Gravitationsterm in Bezug auf den Endeffektor (14) darstellt, und
$\tau_R$: die der Bewegung des Endeffektors (14) entgegenwirkende Roboter-interne Reibkraft ist.

**7.** Verfahren nach einem der Ansprüche 1 - 6,
**dadurch gekennzeichnet,**
**dass** der Kraft-Ist-Wert $\tau_m$ mithilfe eines einkanaligen Kraftsensors (34) und/oder die Ist-Position $q$ des Endeffektors (14) mithilfe eine funktional sicheren Positionssensors (24) erfasst wird.

8. Verfahren nach einem der Ansprüche 1 - 7,
**dadurch gekennzeichnet,**
**dass** die Schritte a) - d) zyklisch wiederholt werden.

9. Verfahren nach einem der Ansprüche 1 - 8,
**dadurch gekennzeichnet,**
**dass** der Kraft-Erwartungs-Wert ($M(q)\ddot{q}+C(q,\dot{q})+g(q)-\tau_R$) in Abhängigkeit der Ist-Position $q$ des Endeffektors (14) oder der sonstigen Teile (18) des Roboters (10) und einer oder mehrerer der nachfolgenden Paramater (P) ausgewählt ist: Kinematikgeometrie, Masse, Trägheitsmoment und Reibungskoeffizient, jeweils des Roboters oder Teilen davon.

10. Verfahren nach einem der Ansprüche 1 - 9,
**dadurch gekennzeichnet,**
**dass** der Endeffektor (14) in dem sicheren Zustand stillsteht und zusätzlich seine Bewegungsachsen (x, y, z) fixiert oder frei sind.

11. Verfahren nach einem der Ansprüche 1 - 10,
**dadurch gekennzeichnet,**
**dass** die Bewegungsachsen (x, y, z) des Endeffektors (14) zu unterschiedlichen Zeitpunkten verfahren werden und die maximal zulässige Kraft $\tau_{max}$ für jede Bewegungsachse (x, y, z) separat festgelegt wird.

12. Roboter (10), insbesondere für eine Mensch-Roboter-Kollaboration, mit:

einem Endeffektor (14),
einer Ermittelungs-Einheit (22) zum Ermitteln eines Kraft-Erwartungs-Werts ($M(q)\ddot{q}+C(q,\dot{q})+g(q)-\tau_R$) an dem Endeffektor (14) oder in Bezug auf diesen in Abhängigkeit einer Ist-Position $q$ des Endeffektors (14) oder sonstigen Teilen (18) des Roboters (10),
einer Mess-Einheit (34) zum Messen eines Kraft-Ist-Werts $\tau_m$ an dem Endeffektor (14) oder in Bezug auf diesen,
einer Rechner-Einheit (38) zum Bilden einer Differenz aus dem Kraft-Erwartungs-Wert ($M(q)\ddot{q}+C(q,\dot{q})+g(q)-\tau_R$) und dem Kraft-Ist-Wert $\tau_m$,
einer Bereitstell-Einheit (40), welche einen Toleranzwert $\tau_{F,max}$ bereitstellt, wobei der Toleranzwert $\tau_{F,max}$ geeignet ist, einen Fehler bei der Messung des Kraft-Ist-Werts $\tau_m$ zu detektieren, und
einer Sicherheits-Einheit (46) zum Überführen des Endeffektors (14) in einen sicheren Zustand in Abhängigkeit der Differenz und des bereitgestellten Toleranzwerts $\tau_{F,max}$.

13. Computerprogrammprodukt, welches auf einer programmgesteuerten Einrichtung die Durchführung des Verfahrens gemäß einem der Ansprüche 1 - 11 veranlasst.

FIG 1

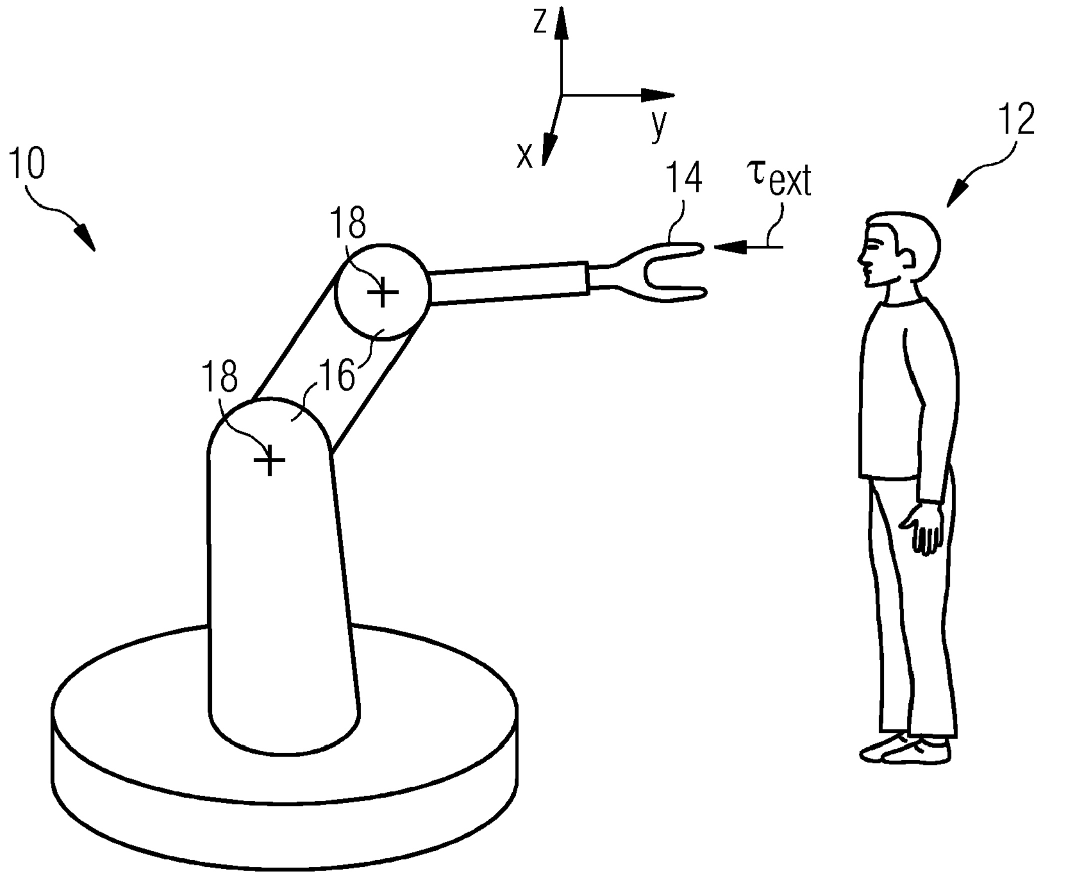

FIG 2

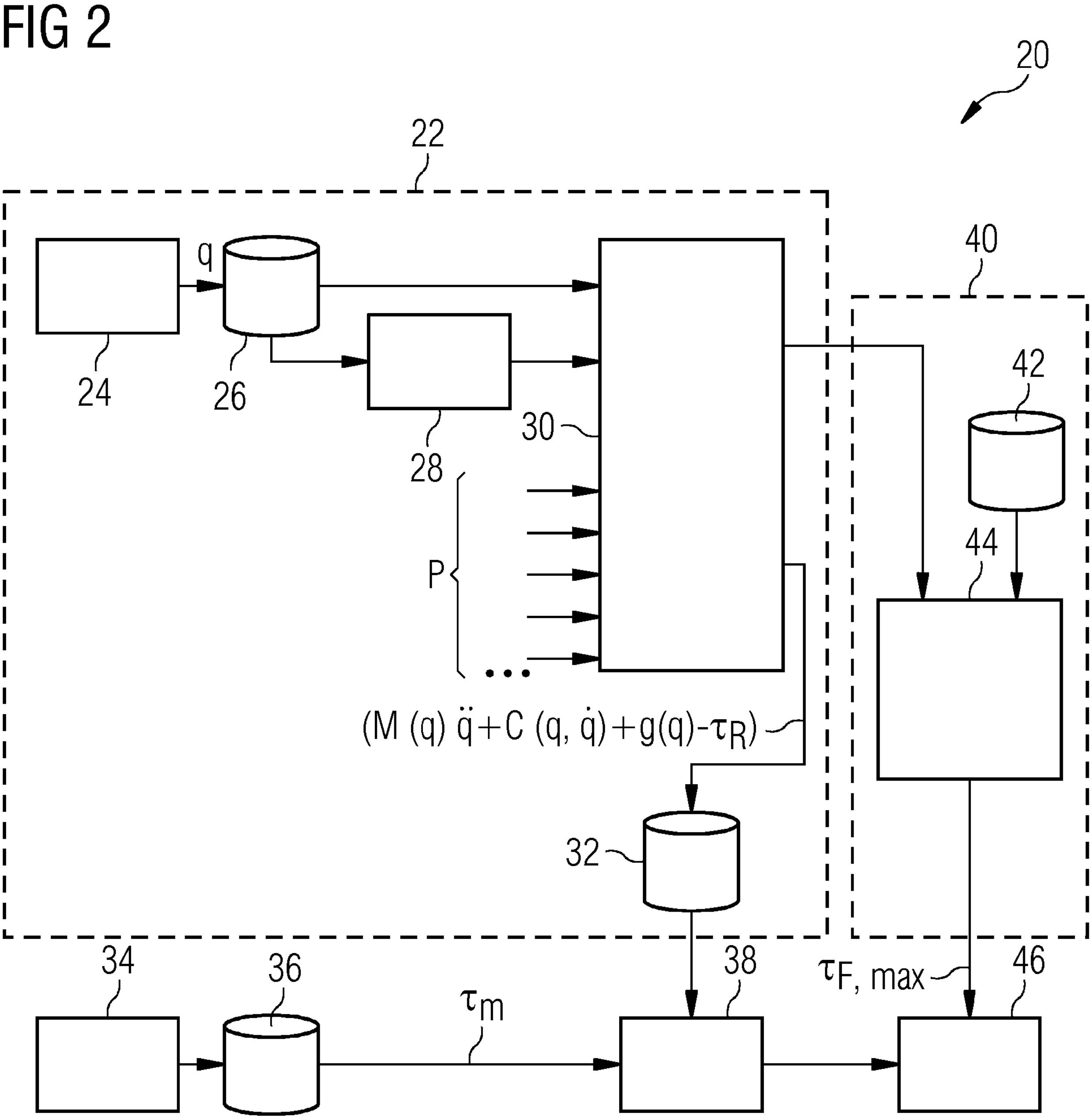

FIG 3

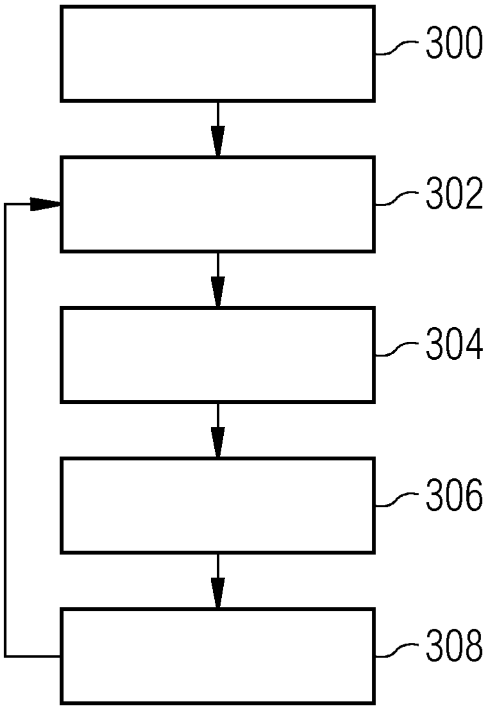


FIG 4

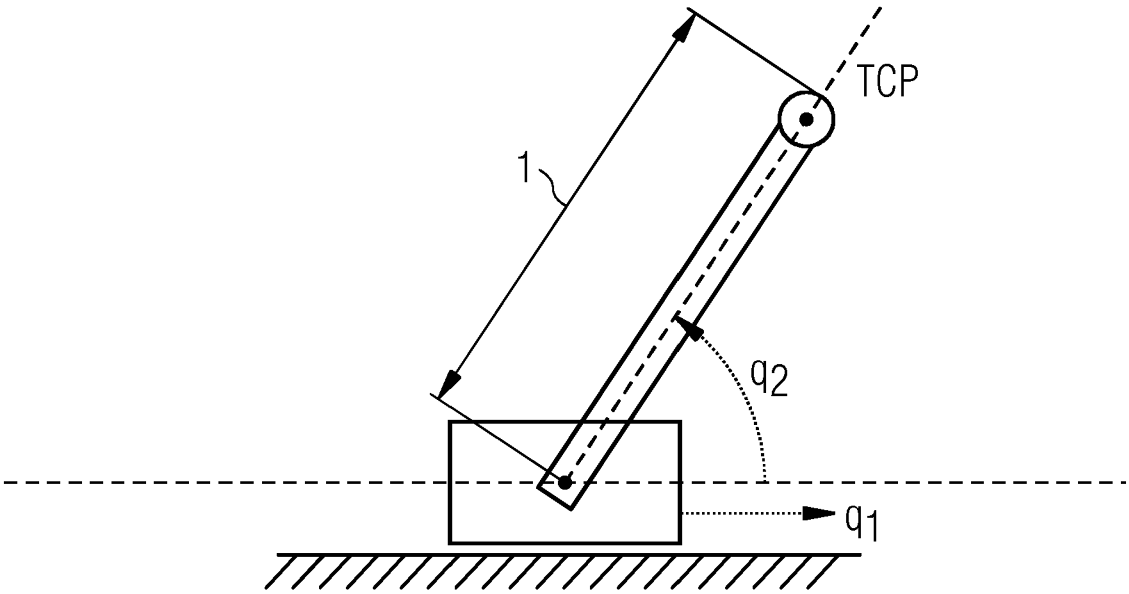

FIG 5

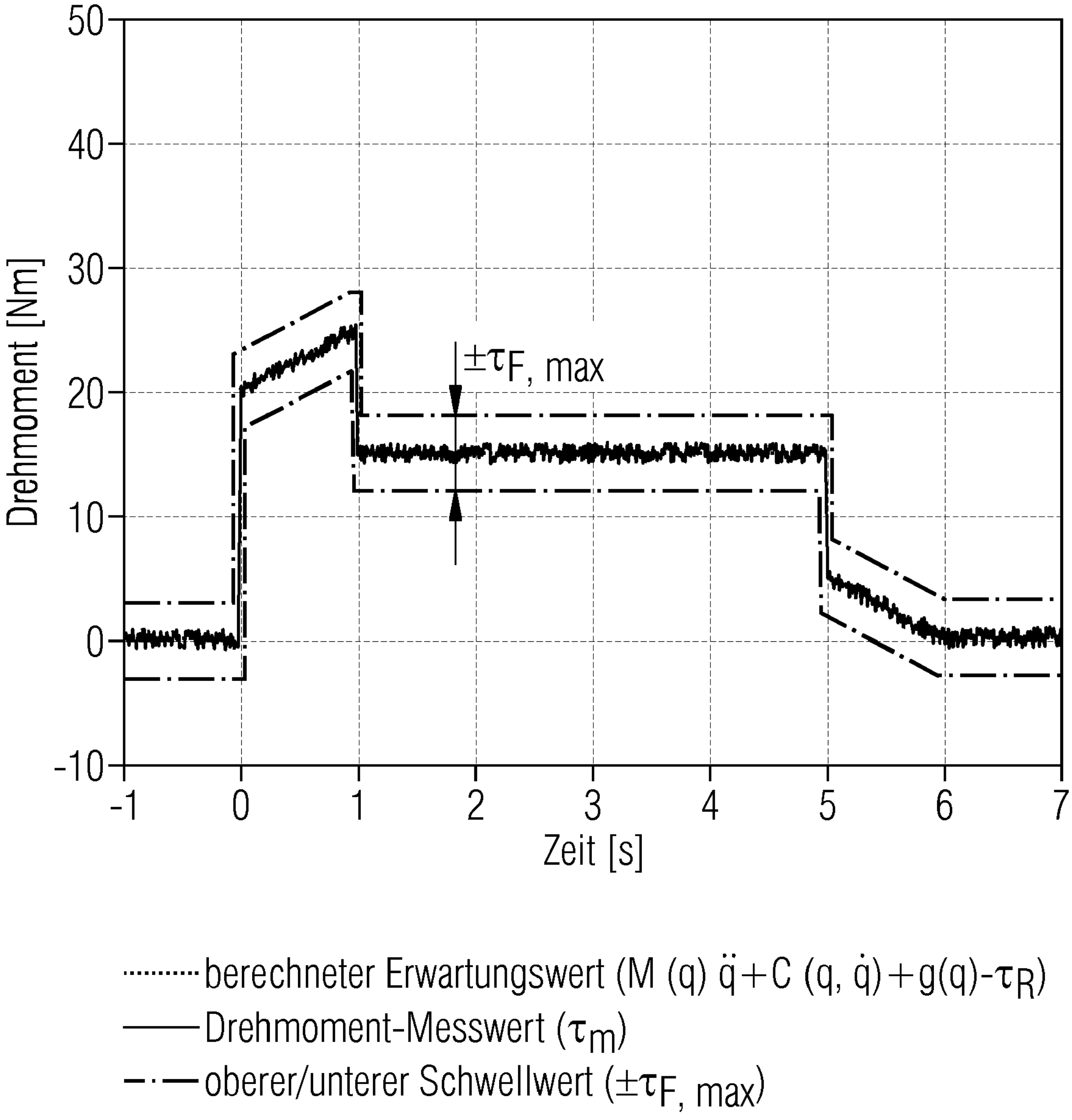
50
40
30
20
10
0
-10
Drehmoment [Nm]
-1
0
1
2
3
4
5
6
7
Zeit [s]
$\pm\tau_{F,\,max}$
berechneter Erwartungswert $(M\,(q)\,\ddot{q}+C\,(q,\,\dot{q})+g(q)-\tau_R)$
Drehmoment-Messwert $(\tau_m)$
oberer/unterer Schwellwert $(\pm\tau_{F,\,max})$

FIG 6

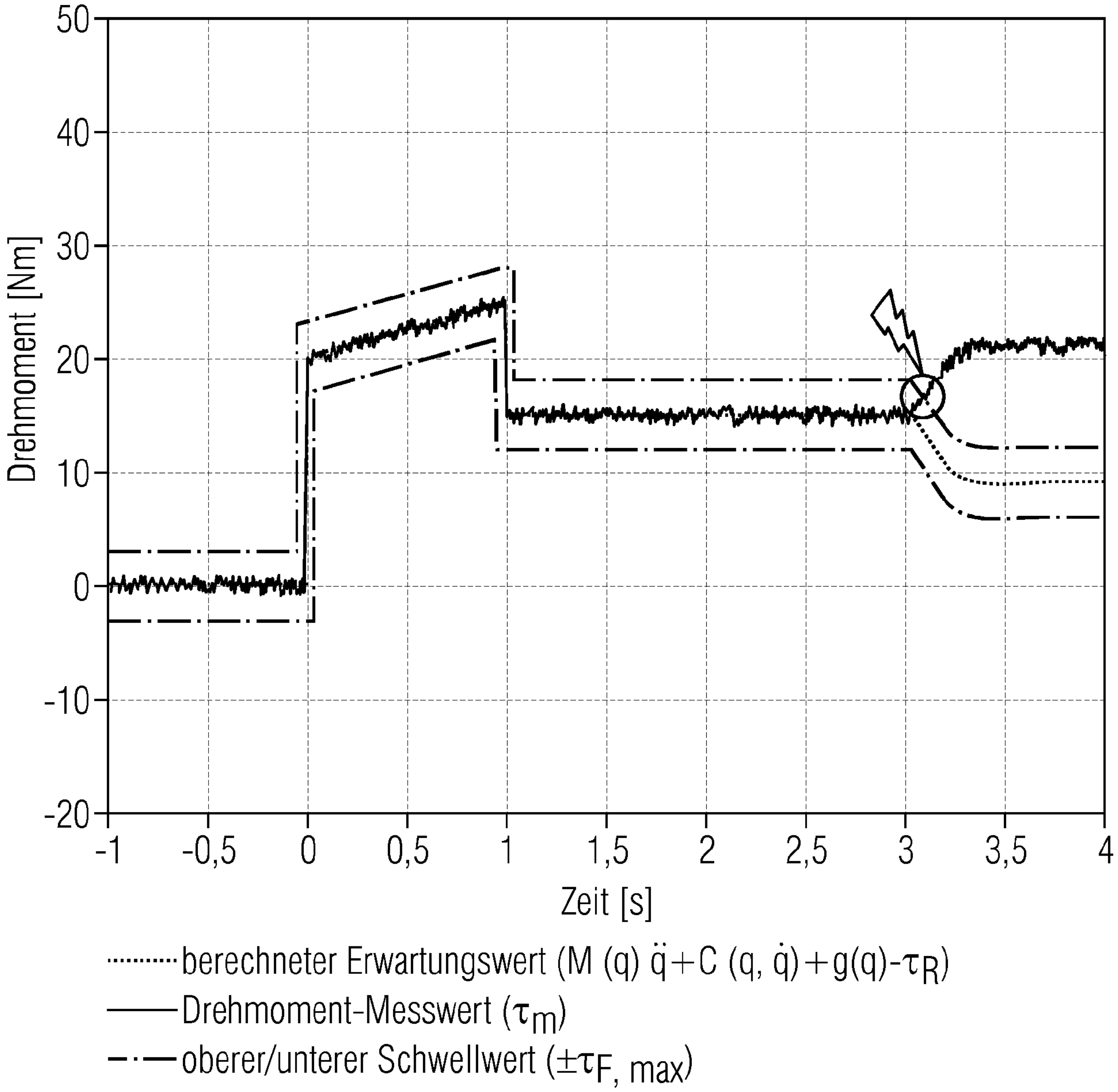
50
40
30
20
10
0
-10
-20
Drehmoment [Nm]
-1
-0,5
0
0,5
1
1,5
2
2,5
3
3,5
4
Zeit [s]
berechneter Erwartungswert ($M(q)\ddot{q}+C(q,\dot{q})+g(q)-\tau_R$)
Drehmoment-Messwert ($\tau_m$)
oberer/unterer Schwellwert ($\pm\tau_{F,\ max}$)

FIG 7

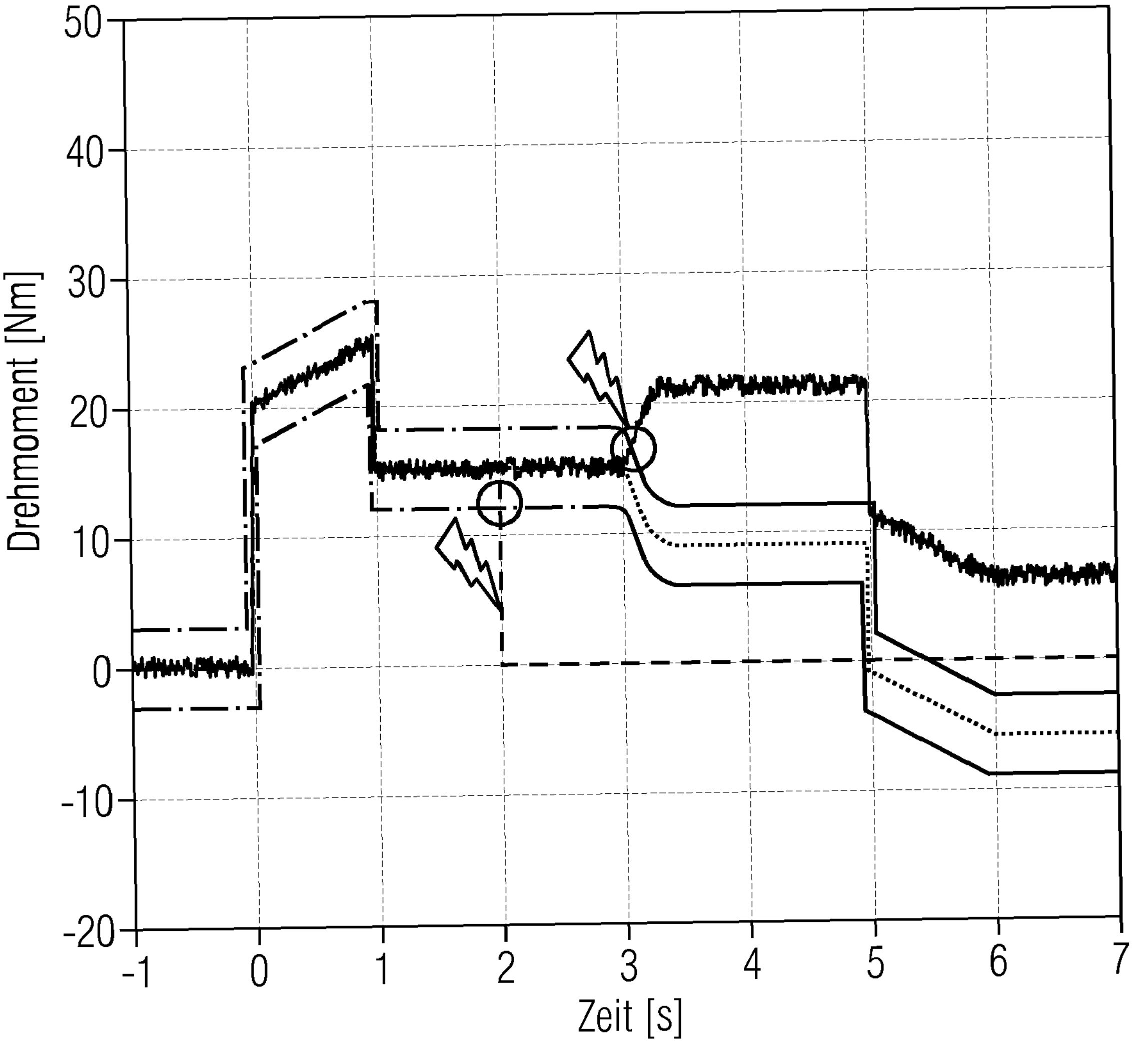


berechneter Erwartungswert $(M(q)\ddot{q}+C(q,\dot{q})+g(q)-\tau_R)$
"stuck-at-zero"- Messwertfehler
Drehmoment-Messwert $(\tau_m)$
oberer/unterer Schwellwert $(\pm\tau_{F,\,max})$

Europäisches Patentamt
European Patent Office
Office européen des brevets

# EUROPÄISCHER RECHERCHENBERICHT

Nummer der Anmeldung
EP 19 21 1804

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 008908 A1 (FANUC CORP [JP]) 2. Februar 2017 (2017-02-02) * das ganze Dokument * | 1-13 | INV. B25J9/16 |
| A | DE 10 2016 001643 A1 (FANUC CORP [JP]) 25. August 2016 (2016-08-25) * Absätze [0009], [0011], [0024], [0025], [0037] - [0041]; Abbildungen 1, 4B,5 * | 1-13 | |
| A | DE 10 2015 016341 A1 (FANUC CORP [JP]) 23. Juni 2016 (2016-06-23) * Absätze [0006], [0039], [0053] - [0060], [0074] - [0077]; Abbildungen 1-4,7 * | 1-13 | |

RECHERCHIERTE SACHGEBIETE (IPC)

B25J
G05B

Der vorliegende Recherchenbericht wurde für alle Patentansprüche erstellt

| Recherchenort | Abschlußdatum der Recherche | Prüfer |
|---|---|---|
| Den Haag | 29. April 2020 | Salvador, Didier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

1

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 19 21 1804

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2020

| Im Recherchenbericht angeführtes Patentdokument | Datum der Veröffentlichung | Mitglied(er) der Patentfamilie | Datum der Veröffentlichung |
|---|---|---|---|
| DE 102016008908 A1 | 02-02-2017 | CN 106393097 A | 15-02-2017 |
| | | DE 102016008908 A1 | 02-02-2017 |
| | | JP 6591818 B2 | 16-10-2019 |
| | | JP 2017030081 A | 09-02-2017 |
| | | US 2017028565 A1 | 02-02-2017 |
| DE 102016001643 A1 | 25-08-2016 | CN 105911861 A | 31-08-2016 |
| | | DE 102016001643 A1 | 25-08-2016 |
| | | JP 6055002 B2 | 27-12-2016 |
| | | JP 2016153155 A | 25-08-2016 |
| | | US 2016243700 A1 | 25-08-2016 |
| DE 102015016341 A1 | 23-06-2016 | CN 105710889 A | 29-06-2016 |
| | | DE 102015016341 A1 | 23-06-2016 |
| | | JP 5927284 B1 | 01-06-2016 |
| | | JP 2016117141 A | 30-06-2016 |
| | | US 2016176052 A1 | 23-06-2016 |

EPO FORM P0461

Für nähere Einzelheiten zu diesem Anhang : siehe Amtsblatt des Europäischen Patentamts, Nr.12/82